# EUROPEAN PATENT SPECIFICATION

(11) **EP 2 781 668 B1**
(45) Date of publication and mention of the grant of the patent: **16.05.2018**
(21) Application number: 14160905.7
(22) Date of filing: 20.03.2014
(51) Int. Cl.: E04D 5/14, F16B 2/02, E04D 13/16, E04F 13/08, F16B 5/06, E04B 9/18, E04B 9/00

(54) **Fixing arrangement and method for attaching a lining framework to a structural element**
Befestigungsanordnung und Verfahren zur Befestigung eines Auskleidungsrahmens an ein Strukturelement
Dispositif de fixation et procédé de fixation d'un cadre de garniture à un élément de structure

(30) Priority: 22.03.2013 FR 1352583
(43) Date of publication of application: 24.09.2014
(73) Proprietor: Ateliers LR Etanco, 78230 Le Pecq (FR); URSA Insulation, S.A., 28004 Madrid (ES)
(72) Inventor: Leroy, Alain, 78820 Juziers (FR); Vayssie, Patrick, 31410 Noe (FR)
(74) Representative: Bandpay & Greuter

(56) References cited:
- WO-A1-2006/036056
- DE-A1- 2 433 669
- DE-A1- 4 000 874
- DE-U1- 20 116 359
- FR-A1- 2 624 172
- FR-A1- 2 925 929
- US-A- 5 392 576

## Description

### Field of the Invention

The invention relates to a fixing arrangement and method for attaching a lining framework to a structural element, especially a wall or roof structure.

### Related Art

Building procedures are increasingly using membranes, particularly in the context of provisions for insulation aiming at reducing fossil fuel consumption for heating and air conditioning purposes. Such membranes, especially vapour retardant and/or air tightness membranes, are used as a complement to a classic installation system using insulating material, and fitted, for example, under the roof or in the inner side of a wall of a building.

The insulation material is usually made of mineral wool, e.g. glass wool or stone wool. Alternatively other materials are employed, e.g. fibres from natural organic materials, like wood fibre, cellulose, hemp, flax, coir, reed.

The complementing element, i.e. the membrane is preferentially used to ensure that air does not enter or exits the building through the roof or the walls (air tight or air barrier). So, the membrane hinders on one side the ingress of cold air from the exterior into the building interior, and on the other side the escape to the exterior of warm air from the interior of the building in winter, or the other way around in summer. The membrane is fitted as a complement to the insulation material and installed in the inner side of the roof or the wall of the building, at a distance from it. It is important that the membrane is placed in the side of the insulation layer facing the interior, for two main reasons: a) in order to avoid condensation of water carried by the warm interior air into the insulation material or the structural construction elements; and b) to allow drying of the insulation materials and the structural elements of the constructions (wood beams, masonry, etc.), during the warm season of the year.

The insulation composite system is usually completed with wall lining or roof lining, e.g. dry lining, conventionally in the form of plasterboard or the like, fixed by screws to a lining framework.. The lining framework is formed by a plurality of frame elements, such as U-shaped metal profiles, attached to the lined wall or roof, and at a distance from it, by fixing arrangements. It is important that the lining can be placed at a distance from the membrane and from the insulation material in order to enable equipment, such as cabling, to be routed in the free space between the lining and the membrane.

The membranes customarily used for this purpose are impermeable to air and water. Water vapour and gases such as oxygen can however slowly diffuse thorough the membrane. For this reason, they are called vapour retardant membranes (also known as vapour barriers). The rate of vapour diffusion can be adjusted by selecting the material of the membrane. Membranes having a variable vapour diffusion rate are also available, which rate increases or decreases depending on the environmental air relative humidity.

The membrane can also be used without thermal insulation and it is not confined to use under roofing or in the interior of walls.

In all cases, it is important that the fixing arrangements for the lining framework and the membrane (and insulation) do not pierce the membrane itself, as this would destroy its integrity, especially its air and water impermeability and its resistance to vapour transport.

However, all the known means for attaching a vapour-retardant and or airtight membrane with a space between the membrane and the lining of this type require piercing the membrane. For example, in FR 2 925 929 a strut accessory is disclosed which is adapted for attaching a lining framework onto a structural member of a wall to be lined including a rod provided with one end of which is equipped with means for attaching the same to the structural member of a wall or ceiling to be lined and another end which is furnished with means for assembling the same with the lining framework. The strut accessory is used to fix thermal and/or acoustical insulating material (e.g. a panel, slab, web) inserted between the wall to be lined and a lining partition wall, including at least one wind proof, vapour proof or vapour restricted membrane pierced onto the rod of the strut accessories. The fixation of the insulation material and the lining partition wall is achieved by at least one of the strut accessories which includes two jaws surrounding the rod and locking means which accomplish an axial tightening of these two jaws against each other, both jaws clamping between them, after locking, the membrane at the periphery of its pinning aperture.

The disadvantage of assemblies of this type is that the membrane needs to be pierced in order to realize the mounting of means for attachment and obtain the necessary clamping effect. As a consequence assemblies of this kind comprise membranes which are locally pierced and therefore in the regions where the membrane is punctured the impermeability and vapour-retardancy is locally destroyed with a negative effect on the overall performance of such assemblies. In addition to this, the punctures created weaken the membrane, and are potential start points for tears which may extend through the membrane if it is put under tension.

A further disadvantage is that once the assembly is locked and the membrane punctured, it cannot be unlocked to correct possible mistakes made during the installation. The strut accessories have no possibility to be unlocked and the membrane would have to be replaced or the punctures in the membrane would need to be repaired, what is time-consuming and expensive.

A fixing arrangement which does not puncture a membrane, according to the preamble of claim 1, is furthermore known from US 5392576.

### Disclosure of the Invention

It is the object of the invention to provide a fixing arrangement for a framework lining and a method for attaching a membrane to a structural element which maintain the integrity of the membrane, i.e. which do not pierce the membrane. It is also the object of the invention to provide a composite system, for example an improved insulated wall or insulated roof.

This object is solved by a fixing arrangement according to claim 1, and a method according to claim 9. Preferred embodiments follow from the other claims.

Although the membranes to be attached to the structural element are preferably impermeable, i.e. those membranes are vapour-retardant and/or air- and/or water-tight, the invention is not limited to them, and also other types of membranes (e.g. air permeable membranes, semi-permeable membranes) might be attached to the structural element using the fixing arrangement of the invention.

To this end, the invention proposes a fixing arrangement according to claim 1. In this text, the term "recess", which forms part of the support, is to be understood as the surface or edge limiting a hollow space of the support. In other words, the recess defines a contour, i.e. a pathway of lines or surfaces, which surrounds the respective hollow space. Correspondingly, the term "projecting part" means the surface or edge limiting a bulk material in the form of a bulge extending from the limbs, i.e. the lever of the device. In other words, the projecting part defines a contour, i.e. a pathway of lines or surfaces, which surrounds the respective bulge. Consequently, the recess forms an inner contour, while the corresponding protrusions form an outer contour. The inner contour formed by the recess and the outer contour formed by the projecting part are adjusted, such that the corresponding hollow space of the support and the corresponding bulge of the device fit into each other such that such that the membrane can be clipped and/or clamped between the recess and the projecting part. The hollow space formed by the recess of the support act as receiving means, i.e. as female connector, while the bulges formed by projection part of the device act as plugging part, i.e. as male connector. The recess and the corresponding projecting part are shaped such the bulge can be plugged into / or drawn out from the corresponding hollow space.

The at least one recess and the projecting part of the at least one lever are designed such that the membrane can be clipped and/or clamped keeping its integrity, without piercing the membrane.

The bearing surface acts as guidance for the membrane, and when the device is locked to the support, it holds the membrane resting between the bearing surface and the levers of the device.

Preferentially, the orientation of the bearing surface is aligned to be essentially parallel to the plane of the major surfaces of the insulation material, i.e. the bearing surface extends essentially parallel to the wall or ceiling to be insulated. In other words, the bearing surface extends preferentially essentially in a direction orthogonal to the thickness of the insulating material, i.e. orthogonal to the length axis (X-X') of the panel section of the support.

It is essential for the inventive fixing arrangement to provide a bearing surface. The bearing surface is a part of the strut, in case no intermediate part is employed. For embodiments comprising an intermediate part, the bearing surface is incorporated into the intermediate part.

In any case, it is characteristic for the bearing surface that it is essentially parallel aligned to the lining. In other words, the bearing surface extends essentially parallel to the suspended ceiling or wall to be attached to the structural element. Therefore, the bearing surface also bears in a direction which is essentially parallel to the membrane to be received between the device and the support.

It is further characteristic for the bearing surface that its surface area which might contact with the membrane is smooth. Microscopically speaking, the surface roughness of the bearing surface is low. Macroscopically speaking, the bearing surface might not comprise sharp edges and does not show significant juts and indentations. In other words, the bearing surface is basically even and edges are rounded.

The bearing surface is designed and shaped, such that the membrane which might contact the surface of the bearing surface keeps its integrity. In other words, the bearing surface is configured such that the membrane which might touch the bearing surface does not get pierced, ruptured or scratched.

The membrane can be received in a cavity which is formed between the support and the device once the latter is clamped on the support. The cavity is inter alia bounded by the bearing surface, and by the at least one recess. At locations corresponding to the at least one recess of the support, the cavity is bounded by the at least one protrusion forming the top part of the at least one lever. The at least one recess of the support and the at least one protrusion of the device form mating surfaces between which the membrane can be received. Therefore, at least at these two locations the membrane will be in direct contact with the adjacent surfaces of both, the support and the device, i.e. with the surface of the support formed by the at least one recess, and with the surface of the device, formed by the at least one protrusion. The direct contact between membrane on the one hand and support and device on the other hand provides the fixation of the membrane in the desired position. In these areas, where support and device are designed so that membrane and both mating faces stay in direct contact, both surfaces ,i.e. the surface of the at least one recess (support) and the surface of the at least one protrusion (device) are essentially aligned parallel.

Any part of the support and/or device, e.g. bearing surface, recesses and protrusions which might be in contact with the membrane or which serve as clamping faces for the membrane are designed such that the membrane is either guided, redirected or clamped between the respective surfaces, such that the integrity of the membrane can be maintained. In other words, those surfaces of the support and/or device which might stay in direct contact with the membrane - especially bearing surface, recesses and protrusions of the lever are formed and adapted so that the membrane can be received without getting penetrated, pierced, ruptured and/or scratched.

The advantage associated to aforementioned design of support and device is that the membrane can be kept in a given position while the membrane does not need to be pierced. If an airtight vapour-retardant membrane is employed, the membrane properties i.e. especially the air tightness are kept after the membrane has been clipped/clamped to the device/support.

As will be seen below, the support on which the device is attachable may be made of one single part in the form of a strut (panel or rod), or it may be formed by two parts, namely a strut (panel or rod) and an intermediate part attached to the second end of the strut. In alternative embodiments, where insulation is not required, the support may also be formed by the intermediate part alone, without strut.

The device which forms part of the fixing arrangement is characterised by the presence of at least one lever, more preferably two locking levers, each comprising a projecting part at a first end. The projecting part or parts are designed to be inserted in recess or recesses of the support. To this effect, the lever or levers are elastically mounted on their second end to the device. During locking, the membrane positioned over the bearing surface and the support recess or recesses, is trapped between the recesses and the projecting parts of the levers and therefore the membrane is mainly kept in a fixed position by clipping and/or clamping, without being pierced by the fixing arrangement. The projecting parts of the lever or levers of the device and the recess or recesses of the support are designed such that it is possible to clip or clamp the membrane between them without the membrane being pierced or damaged.

The invention proposes several embodiments for this fixing arrangement, comprising a device and a support.

In an embodiment, the fixing arrangement is characterised in that the device comprises two levers, and the projecting parts of the two levers extend in opposing directions, and are designed such that the locking is performed by increasing the distance between the projecting parts.

In this embodiment, two locking levers of the device are arranged opposite each other, i.e. they are movable in opposing directions and they are designed such that locking is obtainable by increasing the distance between the projecting parts (i.e. separating the projecting parts). As a consequence of the distancing movement, the projecting parts of the levers are received in the recesses of the support. Accordingly, the recesses are preferably facing each other.

Alternatively, the locking lever and the projecting part are designed as one single body (e.g. a cylindrical body) and the locking lever and the projecting part extend circumferentially. The material of the lever has to be designed with the required elasticity, so that the projecting part can be moved such that it can be approached to the recesses of the support and it can be received by them to exert the locking. In this case, where the locking lever and the projecting part extend circumferentially, the support preferably comprises also one single circumferential recess, which is designed to receive the circumferential projecting part of the locking lever. Nevertheless, other configurations are possible where either only the locking lever and the projecting part extend circumferentially, or where only the recess in the support extends circumferentially.

As an advantage, the device of any of the embodiments may include at least one opening situated in the device, and a locking means, preferably comprising at least one rod or a staple-shaped body, which is designed to fit in the at least one opening in such a way as to bias the projecting parts of the at least one lever into the corresponding at least one recess when introduced in the opening.

The device might therefore include an opening, preferably a through opening, situated between the locking levers and a means for locking, designed to operate in the opening in such a way that the projecting parts are moved and/or kept away from each other upon insertion of the means for locking into the through opening. The locking means is designed to fit in the opening in such a way as to bias the projecting parts into the recess and produce the locking.

This locking means might take the form of a rod, for example, especially a smooth rod, and the rod might be furrowed or ringed, with a head, that is, in the form of a "nail" and which is inserted in said opening, preferably with friction, in order to avoid it becomes loose once it has been inserted. The rod may also be threaded, thus having the form of a screw.

In order to restrict the number of operations when mounting the device, it would be advantageous for the rod to be pre-mounted on the device in a waiting position. It may be retained on the body of the device either through simple friction, or through a frangible connection, for example, if it is made from the same material as the device and manufactured in the same operation. The rod might of course be made from a different material to that of the device.

As an advantage, the rod may be retained in its waiting position in the device by means of a frangible connection or through friction, projecting with respect to an external face of the device, in such a way that a frame element is only attachable to the device after insertion of the rod up to a position, where locking of the device to the support is exerted.

The user can therefore lock the device on the support by pressing on the head of the "nail" which inserts the locking means in the opening between the levers and increases the distance of the projecting parts to each other or prevents the projecting parts to move closer to each other. As an advantage, as mentioned before, in its waiting position, the nail projects with respect to an external face of the device, so that the frame element is only attachable to the device after insertion of the nail up to a position, where locking of the device to the support is exerted.

Thus, any embodiment of the fixing arrangement may comprise the locking means, preferably comprising at least one rod or a staple-shaped body, retained on the device by a frangible connection or by friction in a waiting position, projecting with respect to an external face of the device, in such a way that a frame element is only attachable to the device after insertion of the locking means in the opening.

Preferably, the locking means can also be removed from the opening by applying a light force, e.g. by pulling with the hand. This makes possible to unlock the device from the support, since the protruding parts of the levers return to their position previous to locking, when the locking means is removed. This is very useful in order to make corrections during installation, by unlocking and repositioning, without causing damage to the membrane.

In a further embodiment, the fixing arrangement is characterised in that the device comprises two levers, and the projecting parts of the two levers extend towards each other, the two levers being designed such that the locking is obtainable through decreasing the distance between the projecting parts.

In this embodiment, the projecting parts of the levers of the device may be opposed and facing each other. In other words the projecting parts are movable towards each other. In this case, the locking is obtainable by bringing the projecting parts closer together so that the distance between the projecting parts decreases. In this embodiment the projecting parts of the levers in the device face each other, and the locking is made by bringing the projecting parts closer together and holding them in the recesses. Consequently, the recesses of the support are preferably arranged opposite to each other.

In this embodiment the device may comprise at least two openings, preferably through openings, situated on either side of the locking levers, and locking means designed to fit into the at least two openings in order to approach the projecting parts.

In order to achieve locking, in this embodiment in which the device comprises at least two openings situated on either side of the levers, the means for locking can be, for example, a staple-shaped body which is placed in the openings for locking. Such a staple-shaped body comprises as many branches as there are levers to be locked.

As in preceding embodiments, it is advantageous for the staple-shaped body which comprises at least two legs to be retained on the device by means of a frangible connection or through friction in a waiting position, projecting with respect to an external face of the device, in such a way that a frame element is only attachable to the device after insertion of the staple-shaped body up to a position, where locking of the device to the support is exerted. According to the invention, the fixing arrangement is characterised in that the support comprises an elongated strut. In further embodiments, the second end of the strut comprises a strip comprising at least one recess, the strip being able to take at least two positions by folding, a first position aligned with the length axis of the strut and a second position in which it extends at least partially in a direction angularly to the length axis of the strut.

Advantageously, the second end of the strut in this embodiment comprises a strip with at least one recess, and preferably at least two recesses, which strip is able to take at least two positions through bending, a first position aligned with the length axis of the strut (panel or rod), and a second position in which it is extended at least partially in a direction angularly to that of the length axis of the strut. In other words, in the first position the strip is in a position parallel to the length axis of the strut, i.e. it extends in the direction of the plane of the panel or in the length direction of the strut, which is advantageous for the storing of the struts before use, and in the second position the strip is inclined compared to the first position. The angle included between the length axis of the strut and the strip in the second position might have any value (except 180° which would relate to the first position, i.e. the unfolded position). Preferentially the angle is 90°, i.e. the length axis of the panel extends perpendicular to the strip in the folded (second) position.

In the folded position, the strip also forms a bearing surface for the membrane, which further holds the membrane in position at a certain distance from the structural element. When the support is fixed to the structural element, the bearing surface is essentially parallel aligned to the lining to be attached to the structural element, e.g. a suspended ceiling or wall. Therefore, the bearing surface also bears in a direction which is essentially parallel to the membrane to be received between the device and the support.

It is advantageous to arrange the recess or recesses of the support on the strip situated at the second end of the strut. During manufacture, this strip is produced in alignment with the rest of the strut. During use, it may be bent by the user by 90° relative to the length axis of the remaining strut part. Once it has been bent, in the folded position, the strip is able to retain an insulation element which has been fitted on the strut without further measures. This is particularly useful when the fixing arrangement is used e.g. under a roof or in a vertical or sloped wall.

According to the invention, the device is equipped with attachment means for a frame element.

As will be seen below, the fixing arrangement may be used within the scope of fitting an insulating material on a wall or under a roof. When the insulating material and the membrane, which is preferentially a vapour-retardant and/or air-tight membrane, have been installed, some lining is usually affixed to and at a distance from the insulated wall or the insulated roofing. To this effect, a frame, also referred to as frame element, is fixed to the device of the fixing arrangement. Such frames usually consist of U-shaped frame elements which can be fixed to the device by means of interlocking. The frames might be made of metal, metal alloys or any other material with sufficient structural stability. A plurality of frames forms a lining framework at a distance from the wall or roof, to which the lining can be fixed e.g. by using screws.

The fixing arrangement comprises a device which is equipped with attachment means for a frame element. The frame element is designed to cooperate with the attachment means of the device, such that the device can receive the frame element and hold it in position. The attachment means can for instance take the form of opposed grooves, where the branches of the U-shaped frame elements can be clipped to be fixed to the device.

In alternative embodiments, the support of the fixing arrangement comprises an elongated strut and an intermediate part, the intermediate part comprising first means for attachment to the strut, and the intermediate part comprising at least one recess designed to fit with a corresponding projecting part of at least one lever of the device.

According to this preferred embodiment, the invention also relates to a fixing arrangement for attaching a lining framework and a membrane, which is preferentially a vapour-retardant or airtightness membrane, to a structural element (e.g. wall or roof) without piercing said membrane, the support of the fixing arrangement being further provided with an intermediate part comprising first means for attachment to the strut and at least one recess, preferentially two recesses, designed to fit with the projecting parts of the at least one lever of the device. Thus, in this embodiment, the support of the fixing arrangement is formed by the intermediate part and the strut.

In this arrangement, the device is associated with the intermediate part which acts as a holder for the device. The intermediate part therefore comprises first means for attachment to the strut (panel or rod) and second means for attachment in form of at least one recess designed to fit with the projecting part of the at least one lever of the device.

Obviously, depending on the arrangement of these recessed parts, the intermediate part may accommodate any of the above-described embodiments of the device.

In these embodiments, the intermediate part advantageously comprises said bearing surface for the membrane which is preferably perpendicular to the length axis of the strut when the intermediate part is fixed on the strut. This bearing surface further assists to hold the membrane in position at a certain distance from the structural element. When the support is fixed to the structural element, the bearing surface is essentially parallel aligned to the lining to be attached to the structural element, e.g. a suspended ceiling or wall. Therefore, the bearing surface also bears in a direction which is essentially parallel to the membrane to be received between the device and the support.

According to this preferred embodiment of the invention, the support contains an elongated strut in form of a panel or a rod, the first end of which comprises first means of attachment to the structural element, and a second end comprising second attachment means. The second attachment means of the strut is designed to fit with the first means for attachment of the intermediate part.

Preferentially, the second attachment means of the strut (panel or rod) have the shape of recesses, i.e. the strut might comprise at least one recess at the second end.

In the embodiments comprising an intermediate part, as the fixing arrangement is to be used as well in the context of thermal and/or acoustic insulation of roofs and vertical and sloped walls, it is advantageous for the intermediate part to also comprise means for retaining the insulation material in position, following its fitting on the strut and attachment of the intermediate part to the strut.

Any embodiment according to the inventive fixing arrangement is e.g. designed for the attachment of an "insulation assembly" to a structural element, for example to a roof beam or to a wall, the insulation assembly comprising a thermal and/or acoustic insulation material (in the form of a panel, slab or web) complemented by a membrane, which is preferentially vapour-retardant and/or air-tight, in the side of the insulation facing the interior of the building, without the membrane losing its integrity, e.g. without piercing the membrane. The fixing arrangement comprises a support in the form of an elongated strut (panel or rod) and optionally an intermediate part, besides a device as described above.

The fixing arrangement according to any of the previous embodiments is characterised in that the support comprises an elongated strut, preferably a panel or a rod, the first end of which comprises means for attachment to a structural element.

The device is attached to the second end of the strut or intermediate part, with this second end or intermediate part comprising the recess or recesses designed to cooperate with the projecting part of the locking lever or levers of the device.

A further aspect of the invention relates to a composite system according to claim 8, comprising a structural element, insulation material, preferably mineral wool mats, a plurality of fixing arrangements according to any of the preceding embodiments, a membrane, preferably a vapour-retardant membrane, a lining framework of frame elements attached to the fixing arrangements, preferably U-shaped metal frame elements, and lining attached to the frame elements at a distance from the membrane, wherein
a) each fixing arrangement comprises a support and a device,
b) the insulation material stay fitted on and retained in position by the plurality of supports,
c) the device of each fixing arrangement resides locked, preferably reversibly locked, by clipping and/or clamping to the support of each fixing arrangement, and
d) the membrane rests in a fixed position at a given distance from the structural member element by being located, trapped and/or clamped, between the device and the support of each of the plurality of fixing arrangements.

The composite system of the embodiments are further characterised by the membrane, which is fixed by being trapped and/or clamped between the device and the support, keeping its integrity, without piercing the membrane.

Exemplary embodiments of the composite systems of the invention are insulated walls or insulated roofs.

The invention also relates to a method according to claim 9 for attaching a membrane, preferably a vapour-retardant and/or air-tight membrane and insulation material to a structural element, using a fixing arrangement according to any embodiment of the invention, which comprises the following steps:
a) attaching the first end of an elongated strut to a structural element,
b) fitting the insulating material on the strut,
c) retaining the insulation material with the support,
d) placing the membrane over the bearing surface and the at least one recess of the support,
e) inserting the projecting part of the at least one lever of the device into the at least one recess, and
f) locking the device on the at least one recess so that the membrane is trapped and/or clamped between the projecting part of the at least one lever of the device and the at least one recess of the support.

The invention also relates to a method according to claim 10. In this method the distancing element for the membrane is an elongated strut comprising, on its second end, a strip bent by the user after having fitted the insulation material.

With the expression that the strip is folded in such a way that the at least one recess is positioned in an operating position, in this method, it is meant that the strip is folded to a degree where the at least one recess of the support is in a position in which it is capable to receive the membrane and the projecting parts of the at least one lever, so that locking can be produced and the membrane can fixed. Another preferred method for attaching a membrane, is the method of claim 11. In any of the methods described above, fitting the insulation material on the strut might be achieved by piercing the strut through the thickness of the insulation material, or it might as well be achieved by locating the strut between two panels or slabs of insulation material, and in abutment with them, without piercing the insulation material.

Any of the methods above is further characterised in that the trapping and/or clamping of the membrane between the projecting part of the at least one lever and the at least one recess of the support, is achieved keeping the integrity of the membrane, without piercing the membrane.

The invention also relates to the use of the inventive fixing arrangement for attaching an insulation assembly, insulation material and imperforated membrane, to a structural element (roof or wall).

Preferably, the method of the invention may further comprise the step of:
- locking the projecting parts of the at least one lever in the at least one recess of the support by inserting locking means into an opening in the device.

The locking of the device in the recesses may be obtained by inserting at least one locking means in the device, which, according to the embodiments of the device, may be described as a «nail» or a staple-shaped body.

The invention is not limited to the described embodiments. The skilled in the art would recognise that other embodiments are possible, without departing from the scope of the invention defined by the claims.

### Brief Description of the Drawings

The embodiments and the variants described below are provided by way of example and are in no way exhaustive in their scope, and refer to the attached drawings in which:
Figure 1 represents a cross section of an embodiment of a fixing arrangement for attaching a membrane and a lining framework (not shown) comprising a device fixed on a support.
Figure 2 represents a perspective view of an embodiment of a fixing arrangement for attaching a membrane (not shown) and a lining framework (not shown) comprising a device fixed on a support.
Figure 3 represents a perspective view of one end of a support formed by a strut to be used in a fixing arrangement according to the invention.
Figure 4 shows a perspective view of another embodiment of the second end of the support to be used in a fixing arrangement according to the invention.
Figure 5 shows a cross section of a further embodiment of a fixing arrangement according to the invention for attaching a membrane and a frame element of a lining framework comprising a device fixed on a support.
Figure 6 represents a cross section of a further embodiment according to the invention of a fixing arrangement for attaching an insulation element, a membrane and a lining network (not shown) to an structural element (not shown), the fixing arrangement comprising a device fixed to a support formed by an intermediate part affixed to a strut.
Figure 7 shows a perspective view of a portion of an elongated strut of a support to be used in a fixing arrangement according to embodiments of the invention.
Figure 8 shows a perspective view of a support formed by a strut to be used in a fixing arrangement according to another embodiment of the invention.
Figure 9 shows a perspective view of the embodiment of figure 8, where the strip in the second end of the strut is folded to receive the membrane, and the recesses are positioned in operating position to receive the device (not shown).
Figure 10 shows a perspective view of a fixing arrangement according to the invention comprising the support of figures 8 and 9 and a device, wherein the device is shown in unlocked, in a waiting position.
Figure 11 shows a perspective view of a fixing arrangement according to the invention comprising the support of figures 8 and 9 and a device, wherein the device is shown locked to the support,
Figure 12 is an exploded view of composite system, showing a fixing arrangement according to the invention used to fix an insulation material, a membrane, frame elements and a lining to a structure; figure 12A provides a detailed view of the fixing arrangement.

### Detailed Description of Preferred Embodiments

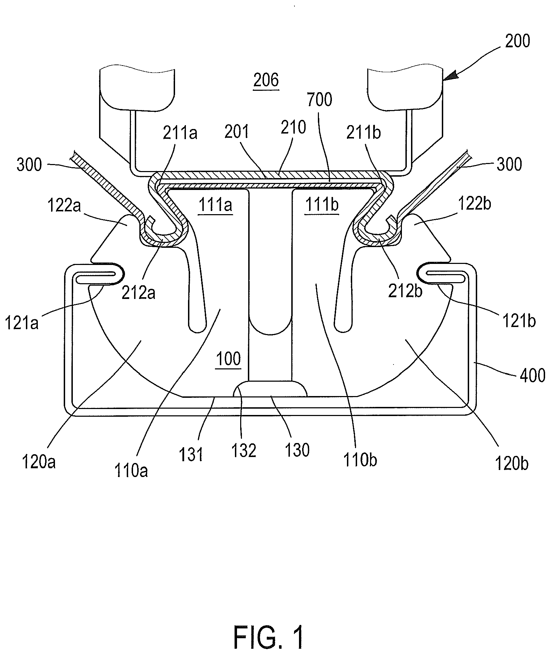

Figures 1 to 3 show first embodiments of a fixing arrangement comprising a device 100 and a support 200. The device 100 is designed to be used for attaching a membrane 300 to the support 200, the latter being designed as a type of support taking the form of an elongated strut 206. The elongated strut might be made of metal. One first end of the support is attached to the structural element (not shown). At a second end, the support 200 comprises a strip 210 (seen in cross section in figure 1), comprising a point 220 (not visible in figure 1) designed to facilitate fitting by piercing of an insulating material and a fragile part (not represented) enabling it to be bent approximately orthogonally to the length axis of the support 200. This fragile or weakened part may, for example, comprise one or several recesses along a fold line.

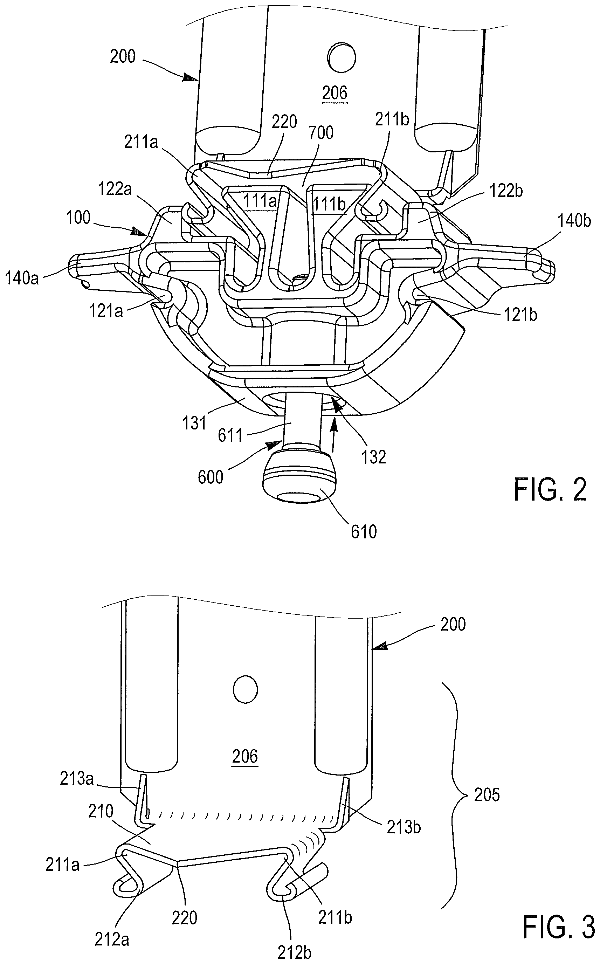

The strip 210 comprises two feet 212a, 212b at its edges bent inwards towards each other and away from a first surface 201 of the strip, also referred to as bearing surface of the support, forming for example a dovetail, so that this strip has the cross-sectional form of a flattened Ω. The formation of these feet defines two recesses 211a, 211b on this bearing surface (201). When in use, the strip is folded by the user in such a way that the bearing surface 201 is orthogonal to the axis of the support and the two recesses are positioned in operating position. The two feet 212a, 212b extend away from the bearing surface and are opposite to each other. It may be seen in figure 2 that the point 220 is slightly inclined in the same direction as the feet 212a, 212b, in order to facilitate the piercing of the insulating material on the strip and the strut.

As shown in figure 3, the strip 210 may comprise, in addition, two lateral portions 213a, 213b which extend orthogonally to the strip and to the bearing surface 201. These flanges (= lateral portions) act as a stop, thus limiting the bending movement of the strip 210 and facilitating fixing the position orthogonal to the length axis of the strip.

The device 100 is formed by a body which comprises two lateral wings 120a, 120b. The lateral wings 120a, 120b each comprise attachment means like a groove 121a, 121b permitting clipping to the branches of a U-shaped frame element 400, which might be made from metal and to which the wall or roof lining 950 may be attached. Between these two wings, two levers 110a, 110b are arranged, which levers are connected to the body of the device at a first end. At their second free end, each lever 110a, 110b comprises a projecting part 111a, 111b, and these projecting parts are arranged to face opposing each other. The shape of these projecting parts 111a, 111b conforms to the geometry of the recesses 211a, 211b of the strip 210 which form part of the support 200.

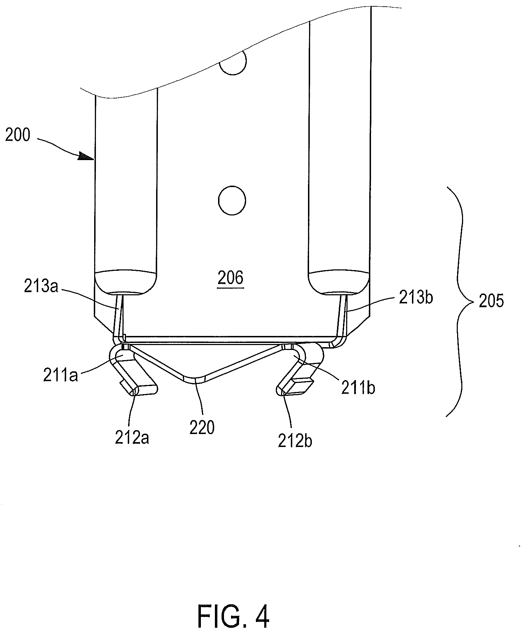

The device 100 is preferentially made from thermoplastic resilient material, and as a result the levers 110a, 110b are elastically movable to some extent. The device 100 might be made from any other material provided is has sufficient elasticity. As a result, the device 100 may be locked or clipped on the bent strip 210 by first approaching the second ends of the levers 110a, 110b, so that they can be inserted between the recesses 211a, 211b. Afterwards, the levers can be moved away from each other, in such a way that the second ends of the levers comprising the projecting parts 111a, 111b enter and are pressed (clamped) against the recesses 211a, 211b of the support. In order to attach the membrane 300 to the support 200, the membrane has previously been placed over the bearing surface 201 of the strip 210, and over the recesses 211a, 211b. By attaching the device 100, the membrane 300 is trapped and/or clamped between the strip 210 of the support 200 and the device 100, keeping its integrity, that is, without piercing the membrane. The edges of the feet 212a, 212b fold in on themselves in a curved form or are totally folded as shown in figure 4, in such a way that only the smooth portions of the feet are in contact with the membrane 300 to avoid damaging it.

The lateral wings 120a, 120b of the device 100 each comprise an excrescence 122a, 122b which extends in the same direction as the levers 110a, 110b, in such a way that a housing is provided between these excrescences 122a, 122b and the projecting parts 111a, 111b. When the device 100 is attached to a support 200 comprising the feet 212a, 212b forming a dovetail, these feet fit in the housings, further assisting in the attachment the membrane, and are prevented from opening by the effect of strong traction.

The device 100 comprises a through opening 130 between the levers 110a, 110b which opens out onto the external face 131 of the device opposite the levers. When the device 100 is clipped on the support 200, a locking means 600 as shown in Fig. 2 is introduced through this opening and between the levers 110a, 110b. The locking means 600 comprises a rod 611 and a head 610, thus taking the form of a "nail", which enables the levers to be moved and blocked in distanced position and thus locking the device 100 in the support 200. The opening 130 opens out onto the external face 131 by means of a widening 132 designed to receive the head 610 of the nail 600 when it is pressed in by the user.

The locking means 600 may be produced in the same moulding operation as the device 100 in such a way that it is manufactured to remain attached to the device 100 by a frangible connection in a waiting position or partially pressed in position. It may also be maintained in this position simply by friction.

The user ensures that the device is clipped and/or clamped by pressing on the head 610 of the locking means 600 until the locking means reaches a locked position. If required, for instance when a mistake in the installation has occurred, the user might unlock the device 100 from the support 200 by pulling the locking means 600 out of the opening 130, applying a light force that overcomes the friction resistance. After unlocking, the fixing arrangement might be repositioned and the device locked again repeating the first locking operation.

In its partially pressed or waiting position, the locking means 600 projects from the face 131 of the device 100, as shown in figure 2, and the frame element 400 cannot, in turn, be clipped onto the wings 120a, 120b of the device 100 without penetration of the locking means 600 up to the locked position, which ensures that it is secure. Furthermore, when the frame element has been clipped, the locking means 600 is retained by the frame element 400 and can no longer leave the opening 130.

As shown in figure 2, the device 100 may comprise two retention means 140a, 140b forming lugs, which extend laterally from either side of the device 100 from the wings 120a, 120b, in such a way that the user is able to access them when the frame element 400 is fixed to the device 100. These lugs are designed to enable the user to detach the frame element 400 if necessary, following clipping, by imposing a rotating movement on the device around an axis parallel to the length axis of the strut of the support 200, which causes the support 200 to turn by torsion, with the device 100 remaining locked to the support 200, and releasing the frame element 400.

It may be seen in figure 2 that the device 100 has not yet locked into the recesses 211a, 211b of the support 200, the locking means is in a waiting position. In this position, the projecting parts 111a, 111b, of the levers can be approached and introduced between the recesses 211a, 211b.

It is understood that the device 100 and the fixing arrangement, permit a space to be provided between the fixed membrane 300 and the lining 950 which will be attached to the lining framework of frame elements 400. This space may be employed e.g. to pass equipment such as cabling, ventilation ducting, etc., or to boxes with electrical components, between the membrane and the lining. In this configuration, the equipment is accessible from the lining side950, without having to perforate or remove the membrane. The space also avoids the membrane being pierced or damaged when drilling or nailing through the lining. Devices 100 of different sizes may be used depending on the amount of space required, based on specific needs.

Figure 4 depicts an embodiment of a support 200 formed by an elongated strut 206 similar to the one of the embodiments of Fig. 1-3, with the difference that the feet 212a, 212b are completely folded on themselves at their ends most distal from the bearing surface.

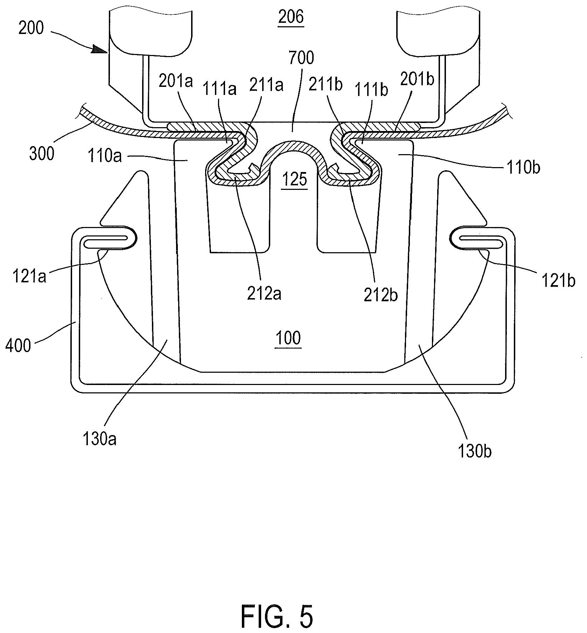

Figure 5 shows an alternative embodiment of the fixing arrangement comprising the device 100 and the support 200. In this embodiment the projecting parts 111a, 111b of the levers 110a, 110b face and extend towards each other. As a result, in order to be able to cooperate with the projecting parts 111a, 111b, the recesses 211a, 211b of the support 200 are located opposed to each other. The bearing surface is in two parts 201a, 201b running on from one another.

The device 100 comprises two through openings 130a, 130b situated on either side of the levers, in such a way as to obtain locking of the projecting parts 111a, 111b in the recesses 211a, 211b by introducing a locking means taking e.g. the form of a staple-shaped body which penetrates these two openings (not represented) and thus approaching the projecting parts 111a, 111b. In order to achieve locking, in this embodiment in which the device comprises at least two through openings situated on either side of the levers, the means for locking can be, alternatively for example, two smooth rods, which are preferably furrowed or ringed, with a head, that are, in the form of a "nail" and which are inserted in said openings, preferably through friction, in order to avoid their loss once they have been inserted. The rods may also be threaded, thus having the form of screws.

The device 100 comprises a tip 125 that extends between the levers 110a, 110b, in such a way that it provides a stop between the tip 125 and the projecting parts 111a, 111b of the levers 110a, 110b. When the device 100 is locked to a support 200 comprising feet 212a, 212b forming a dovetail, these feet are positioned close to the stop, assist by the attachment of the membrane, and are blocked from opening under the effect of strong traction. When the device 100 is locked to the support 200, the membrane 300 rests between the bearing surfaces 201a, 201b and the levers 110a, 110b of the device 100.

At the given location, the tip 125 bounds the cavity 700 which is designed to receive the membrane between the feet 212a, 212b. The surface of the tip 125 which might contact with the membrane is smooth. Microscopically speaking, the surface roughness of the tip is low. Macroscopically speaking, the tip might not comprise sharp edges and does not show significant juts and indentations. In other words, the surface of the tip is basically even and edges are rounded.

The tip 125 is designed and shaped, such that the membrane which might contact its surface keeps its integrity. In other words, the surface of the tip is configured such that the membrane which might touch the surface of the tip does not get pierced or ruptured.

Obviously, the device 100, irrespective of the embodiment, could comprise only one or more than one locking levers, each with a projecting part. In this case, the support could have the corresponding number of recesses.

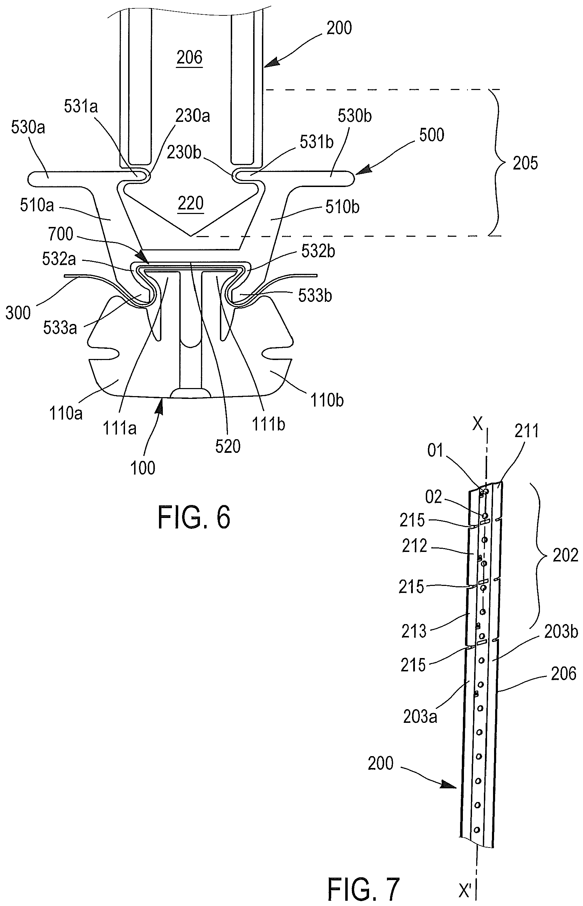

Figure 6 shows a cross section of a further embodiment of a fixing arrangement of the invention for a membrane 300 and a lining 950 (not shown) to a structural element 800 (not shown), comprising a device 100, a strut 206 and an intermediate part 500. The device 100 is similar to the previously described device and thus reference is made to the above description.

In this embodiment, the support 200 does not comprise a folded strip but remains flat. The first end of the strut 206 is attached to the structural element 800 (not shown). The second end 205 of the strut 206 comprises a point 220 designed for insertion through an insulating material and first means for attachment in the form of grooves 230a, 230b designed for attachment of the intermediate part 500. When the strut is a rod, these first means for attachment may be e.g. a groove which extends radially around the length axis of the rod.

The intermediate part 500 comprises two branches 510a, 510b which extend from of a base or bearing surface 520 and in a distance from each other. Each branch ends in a transversal plateau 530a, 530b the function of which is to retain an insulation material in position, but which could also take the form of a grill, or claws. Preferentially the transversal plateau 530a, 530b extends essentially parallel to the bearing surface 520 and the largest surfaces of the insulation material. In a mounted position and for such a configuration, both the bearing surface 520 and the transversal plateau 530a, 530b extends essentially orthogonally to the length axis of the support 200 (axis X-X', figure 7).

Each branch 510a, 510b protrudes over the bearing surface 520 in the direction opposite to each plateau 530a, 530b, forming feet 533a, 533b. Recesses 532a, 532b are formed between the feet 533a, 533b and the bearing surface 520. The branches 510a, 510b are positioned opposite each other and are designed and shaped with first means for attachment 531a, 531b to cooperate with the grooves 230a, 230b of the strut 206 in order to attach the intermediate part 500 to the strut 206.

Two feet 533a, 533b extend from the bearing surface 520, essentially as mirrored images and folded inwards towards each other, in such a way that each foot delimits a recess 532a, 532b, wherein both recesses face each other. These recesses 532a, 532b are designed to receive the projecting parts 111a, 111b of the levers 110a, 110b of the device 100, and the membrane 300 can be clipped and/or clamped between these projecting parts 111a, 111b, and the recesses 532a, 532b, the membrane resting between the bearing surface 520 and the levers 110a, 110b.

Obviously, this intermediate part 500 could comprise feet which are arranged in such a way as to form recesses 532a, 532b facing each other, in order to receive a device 100 with projecting parts of the levers which can be approached to exert locking, according to the embodiments as described above.

In variations of this embodiment, the intermediate part might be formed with a toroid-like shape, where the recesses 532a, 532b, the feet 533a, 533b, the branches 510a, 510b, and the first means for attachment 531a, 531b, extend radially around the height axis of the toroid-like intermediate part.

The advantages of these embodiments of a fixing arrangement comprising an intermediate part are as follows:
- The strut is a standard part, without any arrangement other than the two grooves 230a, 230b in order to permit attachment of the intermediate part to it, and a pointed end 220 in order to facilitate the piercing of the insulating material,
- it obviates the need to fold a part of the support,
- the pulling forces are exercised directly on the strut length axis,
- if no insulation is required or desired, the intermediate part may as well be fixed directly on a wall or ceiling structure.

Figure 7 shows an embodiment of a first end 202 of a support 200. The support 200 comprises an elongated strut 206 according to a length direction illustrated by the axis X-X', comprising longitudinal grooves 203a, 203b forming stiffeners, and a series of openings along the length O1, O2, etc. (only the first two openings are labelled in Figure 7 to improve clarity) in order to facilitate attaching the strut to a structural element 800, in particular a frame element, e.g. by using screws. The strut 206 might be made of metal.

At this first end 202, the support 200 comprises a certain number of plates, e.g. three plates 211, 212, 213, which are provided with weakened sections including cut-outs 215 which are stamped or scored, in such a way that it is possible to separate all or some of these plates 211, 212, 213 by folding and pulling movements exercised by the operator. To this effect, the strut 206 is made from a supple metal such as mild steel, for example, treated through stamping or drawing.

The scored plates 211, 212, 213 permit adjustment of the length of the support 200 to fit the thickness of the layer of insulating material to be inserted and the desired distance from the membrane and the lining framework of frame elements 400 to the structural element 800. Therefore, a single type of hanger can be used for all available thicknesses of insulating material and distances between membrane, frame elements 400, and structural element 800. The multiplicity of openings O1, O2, etc. permits a more finely adjusted attachment of the support 200 to a structural element 800.

These same arrangements may also be found at the first end of a support 200, if the strut is in the form of a rod, that is, presenting a non-flattened section. It would be sufficient for the rod to be extended at its first end by a flattened element comprising scored segments and openings in order to permit attachment at an adjustable distance from a structural element 800.

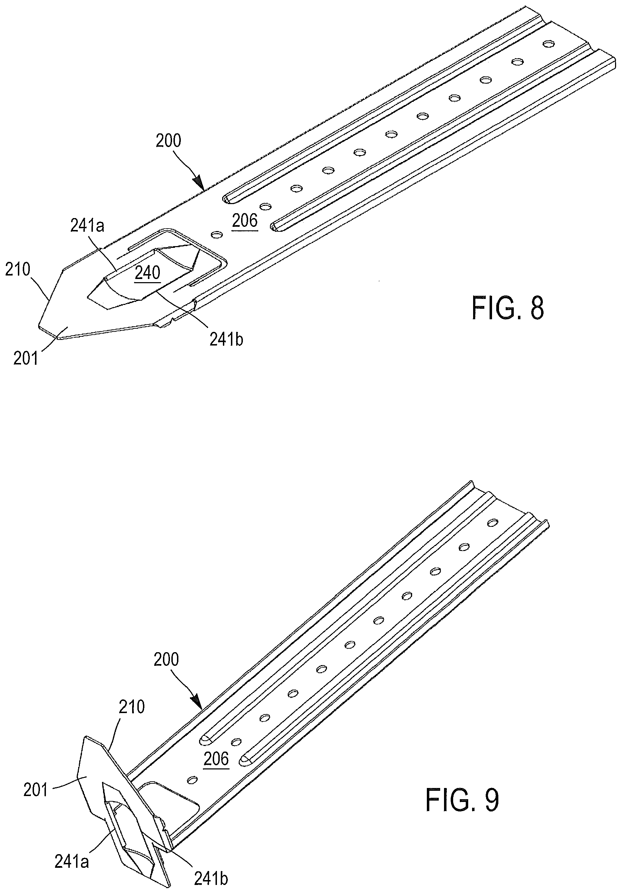

Figure 8 shows a perspective view of a variation of one embodiment where the support 200 is formed by an elongated flat strut 206. In this embodiment, the second end of the strut 206 is formed by a strip 210 which can be folded. The strip comprises a bearing surface 201, an opening 240 the lateral edges 241a, 241b of which form recesses.

Figure 9 shows another perspective view of the support 200 of figure 8, in which now the strip 210 has been folded so that the bearing surface 201 adopts a position orthogonal to the length axis of the strut 206. In this position, the recess 240 is also positioned in an operational position, in which it can receive the projecting parts of the levers of the device (not shown).

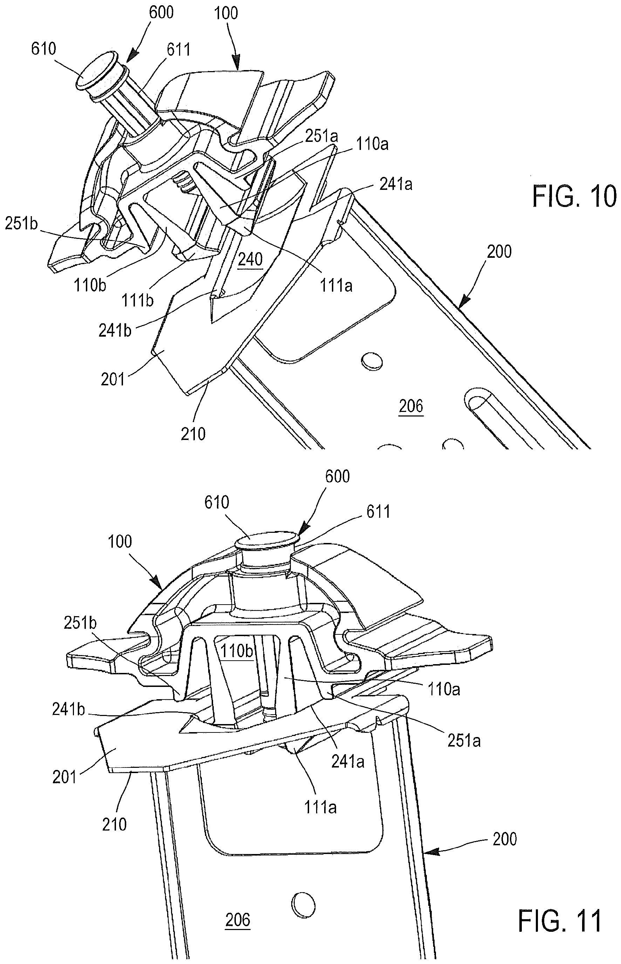

Figure 10 shows a perspective view of a fixing arrangement according to preferred embodiments of the invention, in which the support 200 of Figures 8 and 9 is shown in relation to the device 100, which can be locked to it. The device 100 is similar to the one showed in Figure 2, and it comprises two locking levers 110a, 110b with corresponding projecting parts 111a, 111b, which are designed to fit in the recess 240 of the support 200. In addition, the device 100 comprises two excrescences 251a, 251b essentially parallel to the levers 110a, 110b, and placed on both sides of said levers.

The device furthermore comprises locking means 600 in the form of a nail with a rod 611 and a head 610. In this figure, the locking means is shown in its waiting position. When in use, the membrane (not shown) is placed over the bearing surface 201 and the recess 240 of the support, before projecting parts 111a, 111b of the levers 110a, 110b of the device 100 are introduced in the recess 240 of the support.

Figure 11 shows the fixing arrangement of the previous figure, where now the device 100 has been locked to the support 200 by introducing the projecting parts of the levers 110a, 110b into the opening 240 of the support 200, and the locking means 600 is brought to the locked position by being pressed and introduced deeper into the device 100. In use, the membrane (not shown) rests over the bearing surface 201, being trapped and/or clamped between the projecting parts 111a, 111b of the levers 110a, 110b of the device 100 and the edges 241a, 241b of the opening 240 of the support 200. The two excrescences 251a, 251b rest on the membrane, therefore limiting the movement of the device 100 relative to the support 200.

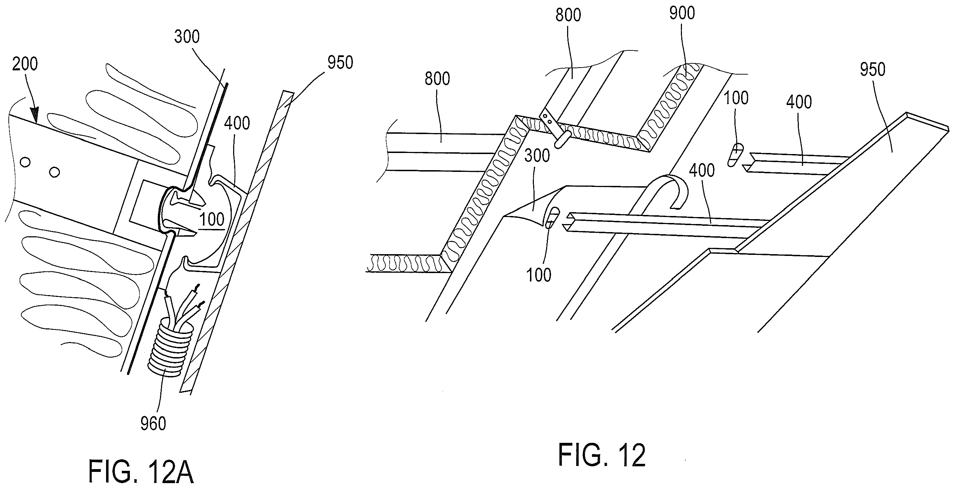

Figure 12 shows a composite system where a plurality of the fixing arrangements according to the invention is used to fix slabs of an insulation material 800, a membrane 300, frame elements 400 and a lining 950 to a structure 800. In the figure the structural elements are beams of a roof, but it could be any part of a building needing an interior insulation, such as a wall. Each of the fixing arrangements comprises a support 200 and a device 100. Each support 200 is secured to a structure element 800 by its first end 202 (not shown) for instance by screwing. The slabs of insulation material 900 have been applied against the supports, the strip 210 (not shown) being aligned with the strut 206 of the support and pierced by the support 200. The strip of each support has then been folded in order both to retain the insulation material 900 and to put the recesses in operating position. Strips of a membrane 300 have been applied to the bearing surface and the recesses of the support, then a device 100 has been applied on the membrane 300 and the recesses, clamping said membrane between the levers of the device on the one part and the recesses and the bearing surface of the support on the other part. Once a plurality of such fixing arrangements have been fixed (only two are shown on figure 12), securing the insulation material slabs 900 and the membrane strips 300 to the structural elements 800, frame elements 400 are snapped to the devices 100, then the slabs of lining 950 are fixed to the frame elements 400, for instance by screwing.

Figure 12A provides an enlarged view of the fixing arrangement. From this figure, it can be seen that the membrane, in addition to be kept intact (not pierced), is kept at a distance from the lining 950, which presents the following advantages:
- when screwing the lining 950 to the frame elements 400, there is no risk to pierce the membrane,
- a space has been arranged between the membrane 300 and the lining 950, allowing for instance the presence of electric wires 960 or pipes which can be accessed through the lining without piercing the membrane 300.

## Claims

1. Fixing arrangement for attaching a lining framework of frame elements (400) to a structural element (800), at a distance from an insulated wall or roof, said fixing arrangement comprising a device (100) and a support (200), wherein the device (100) and the support (200) are designed to receive a membrane (300), the support (200) comprising a bearing surface (201, 201a, 201b, 520) for the membrane and at least one recess (211a, 211b, 532a, 532b, 240) adapted to receive the membrane, the device (100) being designed to be locked onto the support (200) comprising at least one lever (110a, 110b), with each of the at least one lever (110a, 110b) comprising a projecting part (111a, 111b) designed to fit with the corresponding at least one recess (211a, 211b, 532a, 532b, 241a, 241b) in the support (200), wherein the attachment is obtainable by locking the projecting part (111a, 111b) of the at least one lever (110a, 110b) in the corresponding at least one recess (211a, 211b, 532a, 532b, 241a, 241b), the at least one recess (211a, 211b, 532a, 532b, 240) and the projecting part (111a, 111b) being designed such that the membrane can be clipped and/or clamped between the recess (211a, 211b, 532a, 532b, 240) and the projecting part (111a, 111b), wherein the device (100) is equipped with attachment means (121a, 121b) for a frame element (400) and **characterised in that** the support (200) comprises an elongated strut (206), preferably a panel or a rod, the first end (202) of which comprises means for attachment to a structural element.

2. Fixing arrangement according to claim 1, **characterised in that** the device (100) comprises two levers (110a, 110b), and the projecting parts (111a, 111b) of the two levers extend in opposing directions, and are designed such that the locking is performed by increasing the distance between the projecting parts (111a, 111b).

3. Fixing arrangement according to claim 1, **characterised in that** the device (100) comprises two levers (110a, 110b), and the projecting parts (111a, 111b) of the two levers extend towards each other, the two levers (110a, 110b) being designed such that the locking is obtainable through decreasing the distance between the projecting parts (111a, 111b).

4. Fixing arrangement according to any of the previous claims, **characterised in that** the device (100) comprises at least one opening (130) situated in the device, and a locking means (600), preferably comprising at least one rod (611) or a staple-shaped body, which is designed to fit in the at least one opening (130) in such a way as to bias the projecting parts (111a, 111b) of the at least one lever (110a, 110b) into the corresponding at least one recess (211a, 211b, 532a, 532b, 241a, 241b) when introduced in the opening (130).

5. Fixing arrangement according to claim 4, **characterised in that** the locking means (600), preferably comprising at least one rod (611) or a staple-shaped body, is retained on the device (100) by a frangible connection or by friction in a waiting position, projecting with respect to an external face of the device (131), in such a way that a frame element (400) is only attachable to the device after insertion of the locking means (600) in the opening (130).

6. Fixing arrangement according to claim 1 to 5, **characterised in that** the support (200) comprises an elongated strut (206), the second end (205) of the strut (206) comprising a strip (210) comprising at least one recess (211a, 211b, 240), the strip (210) being able to take at least two positions by folding, a first position aligned with the length axis of the strut (206) and a second position in which it extends at least partially in a direction angularly to the length axis of the strut (206).

7. Fixing arrangement according to any of the claims 1 to 5, the support (200) comprising an elongated strut (206) and an intermediate part (500), the intermediate part (500) comprising first means for attachment (531a, 531b) to the strut (206), and the intermediate part (500) comprising at least one recess (532a, 532b) designed to fit with a corresponding projecting part (111a, 111b) of at least one lever (110a, 110b) of the device (100).

8. A composite system, comprising a structural element (800), insulation material (900), preferably mineral wool mats, a plurality of fixing arrangements according to any of the preceding claims, a membrane (300), preferably a vapour-retardant membrane, a lining framework of frame elements (400) attached to the fixing arrangements, preferably U-shaped metal frame elements, and lining (950) attached to the frame elements at a distance from the membrane, wherein:
a) each fixing arrangement comprises a support (200) and a device (100),
b) the insulation material (900) stay fitted on and retained in position by the plurality of supports (200),
c) the device (100) of each fixing arrangement resides locked, preferably reversibly locked, by clipping and/or clamping to the support (200) of each fixing arrangement, and
d) the membrane (300) rests in a fixed position at a given distance from the structural element (800) by being located, trapped and/or clamped, between the device (100) and the support (200) of each of the plurality of fixing arrangements.

9. Method for attaching a membrane (300), preferably a vapour-retardant or air-tight membrane and insulation material (900) to a structural element (800), using a fixing arrangement according to any of claims 1 to 7, which comprises the following steps:
a) attaching the first end (202) of an elongated strut (206) to a structural element (800),
b) fitting the insulating material (900) on the strut (206),
c) retaining the insulation material (900) with the support (200),
d) placing the membrane (300) over the bearing surface (201, 201a, 201b, 520) and the at least one recess of the support (211a, 211b, 532a, 532b, 2401a, 241b),
e) inserting the projecting part (111a, 111b) of the at least one lever (110a, 110b) of the device (100) into the at least one recess (211a, 211b, 532a, 532b, 241a, 241b), and
f) locking the device (100) on the at least one recess (211a, 211b, 532a, 532b, 240) so that the membrane (300) is trapped and/or clamped between the projecting part (111a, 111b) of the at least one lever (110a, 110b) of the device (100) and the at least one recess (211a, 211b, 532a, 532b, 241a, 241b) of the support (200).

10. Method according to claim 9 for attaching a membrane (300) and an insulation material (900) to a structural element (800) using a fixing arrangement according to claim 6, **characterised in that** it comprises the additional following step:
folding the strip (210) on the second end (205) of the strut (206) in such a way that it retains the insulation material (900) and that the at least one recess (211a, 211b, 241a, 241b) of the support (200) are positioned in an operating position.

11. Method according to claim 9 for attaching a membrane (300) and an insulation material (900) to a structural element (800) using a fixing arrangement according to claim 7, comprising the following steps:
a) attaching the first end (202) of the strut (206) to a structural element (800),
b) fitting the insulating material (900) on the strut (206),
c) attaching the intermediate part (500) on the strut (206), in such a way as to retain the insulating material (900),
d) placing the membrane over the bearing surface (520) of the intermediate part (500) and over the at least one recess (532a, 532b) of the intermediate part (500),
e) inserting the projecting part (111a, 111b) of the at least one lever (110a, 110b) of the device (100) in the at least one recess (532a, 532b) of the intermediate part (500), and
f) locking the device (100) on the intermediate part (500), so that the membrane (300) is trapped and/or clamped between the projecting part (111a, 111b) of the at least one lever (110a, 110b) of the device (100) and the at least one recess (532a, 532b) of the intermediate part (500).

12. Method for attaching a membrane (300) according to any of the claims 9 to 11, **characterised in that** it further comprises the step of:
- locking the projecting parts (111a, 111b) of the at least one lever (110a, 110b) in the at least one recess (211a, 211b, 532a, 532b, 241a, 241b) of the support (200) by inserting locking means (600) into an opening (130) in the device (100).

## Patentansprüche

1. Befestigungsanordnung zum Anbringen eines Verkleidungsrahmens aus Rahmenelementen (400) an einem Bauelement (800) in einem Abstand von einer isolierten Wand oder einem isolierten Dach, wobei die Befestigungsanordnung eine Vorrichtung (100) und eine Halterung (200) umfasst, wobei die Vorrichtung (100) und die Halterung (200) dafür gestaltet sind, eine Membran (300) aufzunehmen, wobei die Halterung (200) eine Auflagefläche (201, 201a, 201b, 520) für die Membran und mindestens eine Auskehlung (211a, 211b, 532a, 532b, 240) umfasst, die dafür eingerichtet ist, die Membran aufzunehmen, wobei die Vorrichtung (100) dafür gestaltet ist, auf die Halterung (200) eingerastet zu werden, und mindestens einen Hebel (110a, 110b) umfasst, wobei jeder des mindestens einen Hebels (110a, 110b) einen vorstehenden Teil (111a, 111b) umfasst, der dafür gestaltet ist, mit der entsprechenden mindestens einen Auskehlung (211a, 211b, 532a, 532b, 241a, 241b) in der Halterung (200) zusammenzupassen, wobei das Anbringen durch Einrasten des vorstehenden Teils (111a, 111b) des mindestens einen Hebels (110a, 110b) in die entsprechende mindestens eine Auskehlung (211a, 211b, 532a, 532b, 241a, 241b) erzielbar ist, wobei die mindestens eine Auskehlung (211a, 211b, 532a, 532b, 240) und der vorstehende Teil (111a, 111b) derart gestaltet sind, dass die Membran zwischen die Auskehlung (211a, 211b, 532a, 532b, 240) und den vorstehenden Teil (111a, 111b) gesteckt und/oder geklemmt werden kann, wobei die Vorrichtung (100) mit Anbringungsmitteln (121a, 121b) für ein Rahmenelement (400) ausgestattet ist, und **dadurch gekennzeichnet, dass** die Halterung (200) eine längliche Strebe (206) umfasst, vorzugsweise eine Platte oder Stange, deren erstes Ende (202) Mittel zum Anbringen an einem Bauelement umfasst.

2. Befestigungsanordnung nach Anspruch 1, **dadurch gekennzeichnet, dass** die Vorrichtung (100) zwei Hebel (110a, 110b) umfasst und die vorstehenden Teile (111a, 111b) der zwei Hebel sich in entgegengesetzte Richtungen erstrecken und derart gestaltet sind, dass das Einrasten durch Erhöhen des Abstandes zwischen den vorstehenden Teilen (111a, 111b) erfolgt.

3. Befestigungsanordnung nach Anspruch 1, **dadurch gekennzeichnet, dass** die Vorrichtung (100) zwei Hebel (110a, 110b) umfasst und die vorstehenden Teile (111a, 111b) der zwei Hebel sich zueinander hin erstrecken, wobei die zwei Hebel (110a, 110b) derart gestaltet sind, dass das Einrasten durch Verringern des Abstandes zwischen den vorstehenden Teilen (111a, 111b) erzielbar ist.

4. Befestigungsanordnung nach einem der vorhergehenden Ansprüche, **dadurch gekennzeichnet, dass** die Vorrichtung (100) mindestens eine Öffnung (130), die sich in der Vorrichtung befindet, und ein Einrastmittel (600) umfasst, das vorzugsweise mindestens eine Stange (611) oder einen krampenförmigen Körper umfasst und das dafür gestaltet ist, derart in die mindestens eine Öffnung (130) zu passen, dass die vorstehenden Teile (111a, 111b) des mindestens einen Hebels (110a, 110b) in die entsprechende mindestens eine Auskehlung (211a, 211b, 532a, 532b, 241a, 241b) vorgespannt werden, wenn es in die Öffnung (130) eingesetzt ist.

5. Befestigungsanordnung nach Anspruch 4, **dadurch gekennzeichnet, dass** das Einrastmittel (600), das vorzugsweise mindestens eine Stange (611) oder einen krampenförmigen Körper umfasst, durch eine zerbrechliche Verbindung oder durch Reibung in einer Warteposition an der Vorrichtung (100) gehalten wird, in Bezug auf eine Außenfläche der Vorrichtung (131) derart vorstehend, dass ein Rahmenelement (400) erst nach dem Einführen des Einrastmittels (600) in die Öffnung (130) an der Vorrichtung anbringbar ist.

6. Befestigungsanordnung nach einem der Ansprüche 1 bis 5, **dadurch gekennzeichnet, dass** die Halterung (200) eine längliche Strebe (206) umfasst, wobei das zweite Ende (205) der Strebe (206) einen Streifen (210) umfasst, der mindestens eine Auskehlung (211a, 211b, 240) umfasst, wobei der Streifen (210) in der Lage ist, durch Abkanten mindestens zwei Positionen einzunehmen, eine erste Position ausgerichtet an der Längsachse der Strebe (206) und eine zweite Position, in der er sich zumindest teilweise in eine zur Längsachse der Strebe (206) abgewinkelte Richtung erstreckt.

7. Befestigungsanordnung nach einem der Ansprüche 1 bis 5, wobei die Halterung (200) eine längliche Strebe (206) und ein Zwischenteil (500) umfasst, wobei das Zwischenteil (500) erste Mittel zum Anbringen (531a, 531b) an der Strebe (206) umfasst und das Zwischenteil (500) mindestens eine Auskehlung (532a, 532b) umfasst, die dafür gestaltet ist, mit einem entsprechenden vorstehenden Teil (111a, 111b) des mindestens einen Hebels (110a, 110b) der Vorrichtung (100) zusammenzupassen.

8. Verbundsystem, umfassend ein Bauelement (800), Isoliermaterial (900), vorzugsweise Mineralwollematten, mehrere Befestigungsanordnungen nach einem der vorhergehenden Ansprüche, eine Membran (300), vorzugsweise eine dampfbremsende Membran, einen Verkleidungsrahmen aus Rahmenelementen (400), der an den Befestigungsanordnungen angebracht ist, vorzugweise u-förmige Metallrahmenelemente, und Verkleidung (950), die in einem Abstand von der Membran an den Rahmenelementen angebracht ist, wobei:
a) jede Befestigungsanordnung eine Halterung (200) und eine Vorrichtung (100) umfasst,
b) das Isoliermaterial (900) an den mehreren Halterungen (200) installiert und durch diese an seiner Position gehalten bleibt,
c) die Vorrichtung (100) jeder Befestigungsanordnung eingerastet sitzt, vorzugsweise umkehrbar eingerastet durch Stecken und/oder Klemmen an die Halterung (200) jeder Befestigungsanordnung, und
d) die Membran (300) an einer festen Position in einem gegebenen Abstand von dem Bauelement (800) verbleibt, indem sie zwischen der Vorrichtung (100) und der Halterung (200) jeder der mehreren Befestigungsanordnungen angeordnet, eingeschlossen und/oder festgeklemmt ist.

9. Verfahren zum Anbringen einer Membran (300), vorzugsweise einer dampfbremsenden oder luftdichten Membran, und von Isoliermaterial (900) an einem Bauelement (800) unter Verwendung einer Befestigungsanordnung nach einem der Ansprüche 1 bis 7, das die folgenden Schritte umfasst:
a) Anbringen des ersten Endes (202) einer längliche Strebe (206) an einem Bauelement(800),
b) Befestigen des Isoliermaterials (900) an der Strebe (206),
c) Halten des Isoliermaterials (900) mit der Halterung (200),
d) Platzieren der Membran (300) über der Auflagefläche (201, 201a, 201b, 520) und der mindestens einen Auskehlung der Halterung (211a, 211b, 532a, 532b, 241a, 241b),
e) Einführen des vorstehenden Teils (111a, 111b) des mindestens einen Hebels (110a, 110b) der Vorrichtung (100) in die mindestens eine Auskehlung (211a, 211b, 532a, 532b, 241a, 241b) und
f) Einrasten der Vorrichtung (100) an der mindestens einen Auskehlung (211a, 211b, 532a, 532b, 240), so dass die Membran (300) zwischen dem vorstehenden Teil (111a, 111b) des mindestens einen Hebels (110a, 110b) der Vorrichtung (100) und der mindestens einen Auskehlung (211a, 211b, 532a, 532b, 241a, 241b) der Halterung (200) eingeschlossen und/oder festgeklemmt wird.

10. Verfahren nach Anspruch 9 zum Anbringen einer Membran (300) und eines Isoliermaterials (900) an einem Bauelement (800) unter Verwendung einer Befestigungsanordnung nach Anspruch 6, **dadurch gekennzeichnet, dass** es den folgenden zusätzlichen Schritt umfasst:
Abkanten des Streifens (210) an dem zweiten Ende (205) der Strebe (206) derart, dass er das Isoliermaterial (900) hält und dass die mindestens eine Auskehlung (211a, 211b, 241a, 241b) der Halterung (200) in einer Betriebsposition positioniert wird.

11. Verfahren nach Anspruch 9 zum Anbringen einer Membran (300) und eines Isoliermaterials (900) an einem Bauelement (800) unter Verwendung einer Befestigungsanordnung nach Anspruch 7, die folgenden Schritte umfassend:
a) Anbringen des ersten Endes (202) der Strebe (206) an einem Bauelement (800),
b) Installieren des Isoliermaterials (900) an der Strebe (206),
c) Anbringen des Zwischenteils (500) an der Strebe (206) derart, dass es das Isoliermaterial (900) hält,
d) Platzieren der Membran über der Auflagefläche (520) des Zwischenteils (500) und über der mindestens einen Auskehlung (532a, 532b) des Zwischenteils (500),
e) Einführen des vorstehenden Teils (111a, 111b) des mindestens einen Hebels (110a, 110b) der Vorrichtung (100) in die mindestens eine Auskehlung (532a, 532b) des Zwischenteils (500) und
f) Einrasten der Vorrichtung (100) an dem Zwischenteil (500), so dass die Membran (300) zwischen dem vorstehenden Teil (111a, 111b) des mindestens einen Hebels (110a, 110b) der Vorrichtung (100) und der mindestens einen Auskehlung (532a, 532b) des Zwischenteils (500) eingeschlossen und/oder festgeklemmt ist.

12. Verfahren zum Anbringen einer Membran (300) nach einem der Ansprüche 9 bis 11, **dadurch gekennzeichnet, dass** es ferner folgenden Schritt umfasst:
Einrasten der vorstehenden Teile (111a, 111b) des mindestens einen Hebels (110a, 110b) in die mindestens eine Auskehlung (211a, 211b, 532a, 532b, 241a, 241b) der Halterung (200) durch Einführen von Einrastmitteln (600) in eine Öffnung (130) in der Vorrichtung (100).

## Revendications

1. Agencement de fixation pour fixer une structure de revêtement d'éléments de bâti (400) sur un élément structurel (800), à une certaine distance d'un mur ou toit isolé, ledit agencement de fixation comprenant un dispositif (100) et un support (200), dans lequel
le dispositif (100) et le support (200) sont conçus pour recevoir une membrane (300), le support (200) comprenant une surface d'appui (201, 201a, 201b, 520) pour la membrane et au moins un évidement (211a, 211b, 532a, 532b, 240) adapté pour recevoir la membrane, le dispositif (100) étant conçu pour être verrouillé sur le support (200) comprenant au moins un levier (110a, 100b), avec chaque dit au moins un levier (110a, 110b) qui comprend une partie en saillie (111a, 111b) conçue pour se monter avec le au moins un évidement (211a, 211b, 532a, 532b, 241a, 241b) correspondant dans le support (200), dans lequel on peut obtenir la fixation en verrouillant la partie en saillie (111a, 111b) du au moins un levier (110a, 110b) dans le au moins un évidement (211a, 211b, 532a, 532b, 241a, 241b) correspondant, le au moins un évidement (211a, 211b, 532a, 532b, 240) et la partie en saillie (111a, 111b) étant conçus de sorte que la membrane peut être attachée et/ou serrée entre l'évidement (211a, 211b, 532a, 532b, 240) et la partie en saillie (111a, 111b), dans lequel le dispositif (100) est équipé avec un moyen de fixation (121a, 121b) pour un élément de bâti (400) et **caractérisé en ce que**
le support (200) comprend une entretoise allongée (206), de préférence un panneau ou une tige, dont la première extrémité (202) comprend un moyen pour se fixer à un élément structurel.

2. Agencement de fixation selon la revendication 1, **caractérisé en ce que** le dispositif (100) comprend deux leviers (110a, 110b), et les parties en saillie (111a, 111b) des deux leviers s'étendent dans des directions opposées, et sont conçus de sorte que le verrouillage est réalisé en augmentant la distance entre les parties en saillie (111a, 111b).

3. Agencement de fixation selon la revendication 1, **caractérisé en ce que** le dispositif (100) comprend deux leviers (110a, 110b), et les parties en saillie (111a, 111b) des deux leviers s'étendent l'une vers l'autre, les deux leviers (110a, 110b) étant conçus de sorte que le verrouillage peut être obtenu en diminuant la distance entre les parties en saillie (111a, 111b).

4. Agencement de fixation selon l'une quelconque des revendications précédentes, **caractérisé en ce que** le dispositif (100) comprend au moins une ouverture (130) située dans le dispositif, et un moyen de verrouillage (600), comprenant de préférence au moins une tige (611) ou un corps en forme d'agrafe, qui est conçu pour se monter dans la au moins une ouverture (130) afin de solliciter les parties en saillie (111a, 111b) du au moins un levier (110a, 110b) dans le au moins un évidement (211a, 211b, 532a, 532b, 241a, 241b) correspondant lors de l'introduction dans l'ouverture (130).

5. Agencement de fixation selon la revendication 4, **caractérisé en ce que** le moyen de verrouillage (600), comprenant de préférence au moins une tige (611) ou un corps en forme d'agrafe, est retenu sur le dispositif (100) par un raccordement cassable ou par friction dans une position d'attente, faisant saillie par rapport à une face externe du dispositif (131), de sorte qu'un élément de bâti (400) ne peut être fixé sur le dispositif qu'après l'insertion du moyen de verrouillage (600) dans l'ouverture (130).

6. Agencement de fixation selon les revendications 1 à 5, **caractérisé en ce que** le support (200) comprend une entretoise allongée (206), la seconde extrémité (205) de l'entretoise (206) comprenant une bande (210) comprenant au moins un évidement (211a, 211b, 240), la bande (210) pouvant prendre au moins deux positions par pliage, une première position alignée avec l'axe de longueur de l'entretoise (206) et une seconde position dans laquelle elle s'étend au moins partiellement dans une direction angulaire par rapport à l'axe de longueur de l'entretoise (206).

7. Agencement de fixation selon l'une quelconque des revendications 1 à 5, le support (200) comprenant une entretoise allongée (206) et une partie intermédiaire (500), la partie intermédiaire (500) comprenant un premier moyen pour se fixer (531a, 531b) à l'entretoise (206), et la partie intermédiaire (500) comprenant au moins un évidement (532a, 532b) conçu pour se monter avec une partie en saillie 111b) correspondante d'au moins un levier (110a, 110b) du dispositif (100).

8. Système composite comprenant un élément structurel (800), un matériau isolant (900), de préférence des tapis de laine minérale, une pluralité d'agencements de fixation selon l'une quelconque des revendications précédentes, une membrane (300), de préférence une membrane de retardateur d'évaporation, une structure de revêtement d'éléments de bâti (400) fixée sur les agencements de fixation, de préférence des éléments de bâti métalliques en forme de U, et un revêtement (950) fixé sur les éléments de bâti à une certaine distance de la membrane, dans lequel :
a) chaque agencement de fixation comprend un support (200) et un dispositif (100),
b) le matériau isolant (900) est monté sur et retenu en position par la pluralité de supports (200),
c) le dispositif (100) de chaque agencement de fixation est verrouillé, de préférence verrouillé de manière réversible, par attache et/ou serrage au support (200) de chaque agencement de fixation, et
d) la membrane (300) repose dans une position fixe à une distance donnée de l'élément structurel (800) en étant positionnée, piégée et/ou serrée, entre le dispositif (100) et le support (200) de chacun de la pluralité d'agencements de fixation.

9. Procédé pour fixer une membrane (300), de préférence une membrane de retardateur d'évaporation ou étanche à l'air et un matériau isolant (900) sur un élément structurel (800), en utilisant un agencement de fixation selon l'une quelconque des revendications 1 à 7, qui comprend les étapes suivantes consistant à :
a) fixer la première extrémité (202) d'une entretoise allongée (206) à un élément structurel (800),
b) monter le matériau isolant (900) sur l'entretoise (206),
c) retenir le matériau isolant (900) avec le support (200),
d) placer la membrane (300) sur la surface d'appui (201, 201a, 201b, 520) et le au moins un évidement du support (211a, 211b, 532a, 532b, 2401a, 241b),
e) insérer la partie en saillie (111a, 111b) du au moins un levier (110a, 110b) du dispositif (100) dans le au moins un évidement (211a, 211b, 532a, 532b, 241a, 241b), et
f) verrouiller le dispositif (100) sur le au moins un évidement (211a, 211b, 532a, 532b, 240) de sorte que la membrane (300) est piégée et/ou serrée entre la partie en saillie (111a, 111b) du au moins un levier (110a, 110b) du dispositif (100) et le au moins un évidement (211a, 211b, 532a, 532b, 241a, 241b) du support (200).

10. Procédé selon la revendication 9 pour fixer une membrane (300) et un matériau isolant (900) sur un élément structurel (800) en utilisant un agencement de fixation selon la revendication 6, **caractérisé en ce qu'**il comprend l'étape suivante supplémentaire consistant à :
plier la bande (210) sur la seconde extrémité (205) de l'entretoise (206) de sorte qu'elle retient le matériau isolant (900) et **en ce que** le au moins un évidement (211a, 211b, 241a, 241b) du support (200) est positionné dans une position opérationnelle.

11. Procédé selon la revendication 9 pour fixer une membrane (300) et un matériau isolant (900) sur un élément structurel (800) en utilisant un agencement de fixation selon la revendication 7, comprenant les étapes suivantes consistant à :
a) fixer la première extrémité (202) de l'entretoise (206) sur un élément structurel (800),
b) monter le matériau isolant (900) sur l'entretoise (206),
c) fixer la partie intermédiaire (500) sur l'entretoise (206), afin de retenir le matériau isolant (900),
d) placer la membrane sur la surface d'appui (520) de la partie intermédiaire (500) et sur le au moins un évidement (532a, 532b) de la partie intermédiaire (500),
e) insérer la partie en saillie (111a, 111b) du au moins un levier (110a, 110b) du dispositif (100) dans le au moins un évidement (532a, 532b) de la partie intermédiaire (500), et
f) verrouiller le dispositif (100) sur la partie intermédiaire (500), de sorte que la membrane (300) est piégée et/ou serrée entre la partie en saillie 111b) du au moins un levier (110a, 110b) du dispositif (100) et le au moins un évidement (532a, 532b) de la partie intermédiaire (500).

12. Procédé pour fixer une membrane (300) selon l'une quelconque des revendications 9 à 11, **caractérisé en ce qu'**il comprend en outre l'étape suivante consistant à :
verrouiller les parties en saillie (111a, 111b) du au moins un levier (110a, 110b) dans le au moins un évidement (211a, 211b, 532a, 532b, 241a, 241b) du support (200) en insérant un moyen de verrouillage (600) dans une ouverture (130) dans le dispositif (100) .
